# FASCICULE DE BREVET EUROPEEN

(11) **EP 3 233 553 B1**
(45) Date de publication et mention de la délivrance du brevet: **05.08.2020**
(21) Numéro de dépôt: 15826140.4
(22) Date de dépôt: 18.12.2015
(51) Int. Cl.: B60K 7/00

(54) **MOTEUR HYDRAULIQUE POUR ROUE DE VEHICULE**
HYDRAULISCHER ANTRIEB FÜR FAHRZEUGRAD
HYDRAULIC MOTOR FOR VEHICLE WHEEL

(30) Priorité: 19.12.2014 FR 1462934
(43) Date de publication de la demande: 25.10.2017
(73) Titulaire: Albert, Laurent, Eugène, 51300 Frignicourt (FR)
(72) Inventeur: Albert, Laurent, Eugène, 51300 Frignicourt (FR)
(74) Mandataire: GIE Innovation Competence Group
(86) Numéro de dépôt international: PCT/EP2015/080483
(87) Numéro de publication internationale: WO 2016/097290

(56) Documents cités:
- DE-A1- 10 006 460
- DE-A1- 19 805 300
- DE-A1-102009 016 010
- FR-A1- 2 655 090

## Description

L'invention se rapporte à un moteur hydraulique pour roue de véhicule.

### Art antérieur

L'invention appartient au domaine des moteurs hydrauliques pour roue de véhicule. Les véhicules concernés sont notamment des engins de chantier, des tracteurs agricoles ou autres machines agricoles automotrices, etc., pour lesquels il est difficile ou impossible de prévoir une transmission mécanique entre le moteur thermique et les roues. On rencontre cette situation notamment avec les véhicules devant avoir une grande garde au sol, incompatible avec la présence d'arbres moteurs rejoignant l'axe des roues motrices. Le moteur thermique entraine une pompe à huile qui alimente le moteur hydraulique en énergie hydraulique sous forme d'huile à haute pression. Ce moteur hydraulique a pour principale fonction de convertir l'énergie hydraulique en énergie mécanique de rotation de la roue.

Le document DE 10 2009 016010 A1 montre un moteur hydraulique à pistons axiaux.

Le document FR2655090 décrit un moteur hydraulique à pistons radiaux qui comporte distributeur d'huile.

On connait un moteur hydraulique pour roue de véhicule, comprenant :
- un élément hydrodynamique comportant :
   i) des alvéoles,
   ii) des pistons montés coulissants chacun dans une alvéole respective en y définissant une chambre à volume variable, et
   iii) des conduits raccordés aux chambres,
- un élément de réaction comportant une came annulaire sur laquelle agit une face active de chaque piston,
- un palier avant et un palier arrière par lesquels, au moins indirectement, l'élément de réaction et l'élément hydrodynamique sont mobiles en rotation l'un par rapport à l'autre,
- un support lié en rotation à l'un des éléments, la roue de véhicule étant en service liée en rotation à l'autre élément,
- un distributeur d'huile solidaire en rotation de l'élément de réaction et faisant sélectivement communiquer les conduits avec une alimentation et un retour d'huile en fonction de sa position angulaire relativement à l'élément hydrodynamique, et
- un frein monté entre les deux éléments pour s'opposer sélectivement audit mouvement de rotation, le frein ayant au moins une première surface de freinage couplée en rotation avec l'élément hydrodynamique et une deuxième surface de freinage couplée en rotation avec l'élément de réaction.

On appellera ci-après « moteur du type spécifié » un moteur répondant à cette définition.

En général l'élément de réaction et le distributeur sont liés en rotation au support, tandis que l'élément hydrodynamique tourne avec la roue par rapport au support.

On appellera « avant » du moteur le côté adjacent à la roue, et « arrière » du moteur le côté opposé à la roue.

Classiquement, du côté arrière, le support est fixé au châssis, éventuellement par l'intermédiaire d'une suspension, et du côté avant l'élément hydrodynamique est directement ou indirectement fixé à la roue. Dans ce cas, des paliers prévus directement ou indirectement entre les deux éléments pour leur rotation relative servent en même temps de paliers porteurs transmettant les efforts entre le châssis du véhicule et la roue, ainsi que les moments autour d'axes transversaux à l'axe du moteur.

Typiquement, le frein est à l'arrière du moteur tandis que le distributeur se trouve entre le frein et les deux éléments proprement dits.

Un inconvénient des moteurs selon l'art antérieur est le manque de compacité.

Un autre inconvénient des moteurs selon l'art antérieur est qu'il n'est pas possible de les alimenter par l'arrière.

Un autre inconvénient des moteurs connus est de comporter de nombreuses pièces.

Encore un autre inconvénient des moteurs connus est de nécessiter un démontage complet pour la plupart des réparations, par exemple la rénovation des pièces de friction du frein, la rénovation de certaines étanchéités, etc.

Les moteurs connus ont une grande longueur axiale qui a le double inconvénient d'empiéter latéralement sur la zone de garde au sol maximale du véhicule, et d'accroître les moments de flexion subis par le moteur du fait des efforts à transmettre entre roue et châssis.

Un but de l'invention est de pallier tout ou partie des inconvénients de l'état de la technique, et/ou d'améliorer la souplesse et la simplicité de fabrication d'un tel moteur tout en conservant ou en améliorant la robustesse et le coût de cette fabrication, de la maintenance et/ou du fonctionnement des moyens par lesquels un moteur hydraulique de roue motrice est fabriqué.

### Exposé de l'invention

On atteint au moins un but avec un moteur hydraulique pour roue de véhicule du type spécifié dans lequel, selon un premier aspect de l'invention, l'élément hydrodynamique est solidaire d'un collet qui entoure le distributeur d'huile et porte sur sa face radialement extérieure des moyens de couplage en rotation avec l'au moins une première surface de freinage, le frein étant ainsi disposé autour du distributeur.

Ainsi, en plaçant le frein autour de la distribution, il est possible de fabriquer un moteur plus compact que ceux de l'art antérieur. En particulier, le moteur présente une longueur axiale réduite. Le moteur comporte moins de pièces que d'autres moteurs connus car le collet forme en même temps une sorte de carter pour la distribution et un élément de frein.

En outre, le frein n'étant plus placé derrière, mais autour du distributeur, le distributeur se trouve proche du côté arrière du moteur, de sorte que l'alimentation du moteur peut se faire par l'arrière d'une manière très propice à la fiabilité des raccordements.

En particulier, l'alimentation peut être centrale ou sensiblement centrale, ce qui est très propice à la fiabilité et à la réduction des pertes de charge, car l'huile réalise un minimum de virages avant d'atteindre l'élément hydrodynamique.

Typiquement, l'élément de réaction entoure l'élément hydrodynamique.

Dans une réalisation préférée, l'élément de réaction est fixé au moins indirectement au support et l'élément hydrodynamique est rotatif par rapport au support.

Selon une particularité, le frein est du type multidisque, et les moyens de couplage sont des cannelures formées sur le collet. Grâce à l'invention, on peut bénéficier des caractéristiques très avantageuses de ce type de frein sans subir l'inconvénient de sa grande longueur axiale puisque celle-ci se superpose, pour l'essentiel, à celle du distributeur.

Dans un mode de réalisation, le distributeur d'huile et le frein ont sensiblement une même longueur axiale.

Compte tenu du couple de freinage exigé par les normes, en particulier pour pouvoir freiner le véhicule même si le moteur hydraulique fournit son couple maximal, un frein, en particulier de type multidisque, doit avoir une certaine longueur axiale en fonction de son diamètre. Il a été trouvé selon l'invention que ces conditions étaient réalisables avec un frein entourant le distributeur et ayant une longueur axiale voisine de celle du distributeur.

Avantageusement, le collet est réalisé d'une seule pièce avec l'élément hydrodynamique. Ainsi, on réduit encore le nombre de pièces.

Avantageusement, dans un mode de réalisation, l'élément hydrodynamique comporte radialement à l'intérieur du collet un chambrage délimité par la face intérieure du collet et par un épaulement de l'élément hydrodynamique à travers lequel débouchent les conduits, le distributeur d'huile étant essentiellement logé dans le chambrage et comportant une face d'extrémité polie qui est en contact glissant avec l'épaulement et comporte des orifices de distribution qui communiquent sélectivement avec les conduits, en fonction de la position angulaire relative de l'élément hydrodynamique et du distributeur d'huile.

Dans une réalisation avantageuse, le support est un couvercle arrière du moteur hydraulique, et le collet est dirigé axialement vers le support.

Suivant un deuxième aspect de l'invention, dans un moteur hydraulique du type spécifié pouvant être conforme au premier aspect ou à ses perfectionnements, le support est un couvercle arrière du moteur et comporte une colonne centrale autour de laquelle est monté le distributeur d'huile, et des conduits de canalisation formés dans la colonne débouchent à travers une surface latérale de la colonne pour communiquer avec des collecteurs correspondants adjacents à une surface radialement intérieure du distributeur d'huile.

Selon une particularité, au moins un tiroir de distribution est monté mobile dans la colonne centrale pour commander le régime de marche du moteur hydraulique.

Avantageusement, dans une réalisation, l'élément de réaction comporte une rallonge tubulaire entourant le frein.

La rallonge tubulaire peut être réalisée d'une seule pièce avec l'élément de réaction.

L'élément de réaction peut être solidarisé avec le support par l'intermédiaire de la rallonge tubulaire.

La rallonge tubulaire et ses particularités préférentielles contribuent à la robustesse, la simplicité et la précision du montage.

De préférence, la rallonge tubulaire est équipée de moyens de couplage, en particulier de cannelures, pour son couplage avec l'au moins une deuxième surface de freinage.

Dans une réalisation avantageuse, le palier arrière est directement ajusté sur une portée formée sur l'élément solidaire de la rallonge tubulaire, et le diamètre extérieur du palier arrière est plus petit qu'un diamètre intérieur des moyens de couplage de la rallonge.

Suivant un troisième aspect de l'invention, dans un moteur hydraulique du type spécifié, pouvant être conforme à un ou plusieurs des aspects précédents ou à tout ou partie de leurs perfectionnements, les deux paliers sont directement ajustés sur des portées formées sur l'élément solidaire du collet, et les deux paliers ont chacun un diamètre intérieur plus grand qu'un diamètre extérieur des moyens de couplage du collet.

Avantageusement, les deux paliers sont directement ajustés sur des portées formées sur chacun des deux éléments.

Grâce à cette disposition, les deux paliers assurent une excellente coaxialité des deux éléments. Ceci réduit les bruits de fonctionnement, ainsi que les risques de cavitation ou de surpression dans les volumes occupés par l'huile de travail.

Suivant un quatrième aspect de l'invention, dans un moteur hydraulique du type spécifié, pouvant être conforme à un ou plusieurs des aspects précédents ou à tout ou partie de leurs perfectionnements, dans le support formant couvercle arrière pour le moteur hydraulique, sont montés des moyens d'actionnement du frein, le frein étant disposé axialement entre le support d'une part et la came d'autre part.

Dans un mode de réalisation, les moyens d'actionnement comprennent un piston annulaire situé autour de l'autre, soumis à l'action d'un ressort dans le sens de l'activation du frein et adjacent à une chambre hydraulique de désactivation du frein à l'encontre du ressort.

Dans un mode de réalisation, les moyens d'actionnement comprennent deux pistons annulaires situés l'un autour de l'autre, l'un adjacent à une chambre hydraulique de freinage de service pour activer le frein par application d'une pression hydraulique, l'autre soumis à l'action d'un ressort dans le sens de l'activation du frein et adjacent à une chambre hydraulique de désactivation du frein à l'encontre du ressort.

Avantageusement, les moyens d'actionnement du frein comprennent un piston sollicité par un ressort dans le sens de l'activation du frein et adjacent à une chambre hydraulique de désactivation du frein à l'encontre du ressort, et le moteur hydraulique selon l'invention comprend des moyens de désactivation mécanique qui peuvent être actionnés depuis une face extérieure du support pour déplacer le piston à l'encontre du ressort.

Avantageusement, les moyens de désactivation mécanique sont liés axialement à un piston annulaire de frein de service dans le sens de désactivation du frein, et des moyens d'appui axial mutuel entre les deux pistons sont prévus pour transmettre au piston soumis à l'action du ressort le mouvement de désactivation généré par les moyens de désactivation mécanique.

Suivant un cinquième aspect de l'invention, dans un moteur hydraulique du type spécifié, pouvant être conforme à un ou plusieurs des aspects précédents ou à tout ou partie de leurs perfectionnements, l'élément hydrodynamique situé radialement à l'intérieur de l'élément de réaction présente deux épaulements successifs tournés vers l'arrière, qui réduisent progressivement le diamètre extérieur de l'élément hydrodynamique de l'avant vers l'arrière, chaque palier étant monté sur l'élément hydrodynamique au voisinage de l'un respectif des deux épaulements, les deux paliers étant de diamètre intérieur différent.

Suivant un sixième aspect de l'invention, dans un moteur hydraulique du type spécifié, pouvant être conforme à un ou plusieurs des aspects précédents ou à tout ou partie de leurs perfectionnements, les deux éléments ont entre eux une interface annulaire le long de laquelle la came annulaire est située axialement entre les deux paliers.

De préférence, l'un au moins des deux paliers est adossé contre un épaulement respectif délimitant la came annulaire à l'une de ses extrémités annulaires.

Suivant un septième aspect de l'invention, dans un moteur hydraulique du type spécifié, pouvant être conforme à un ou plusieurs des aspects précédents ou à tout ou partie de leurs perfectionnements, les deux éléments ont entre eux une interface annulaire le long de laquelle se trouvent dans l'ordre suivant, relativement à la direction axiale :
- le palier avant ;
- la came annulaire ;
- le palier arrière ;
- le frein.

Selon une particularité, le moteur comprend une étanchéité dynamique fermant l'interface annulaire entre les deux éléments, le palier avant étant situé entre la came annulaire et l'étanchéité dynamique.

Dans un mode de réalisation, l'étanchéité dynamique est démontable depuis une face avant du moteur sans démontage des éléments hydrodynamique ou de réaction.

Suivant un huitième aspect de l'invention, dans un moteur hydraulique du type spécifié, pouvant être conforme à un ou plusieurs des aspects précédents ou à tout ou partie de leurs perfectionnements, pour l'accès au frein, les deux éléments sont démontables en un seul ensemble, sans altération d'une étanchéité dynamique qui ferme l'interface du côté avant du moteur hydrodynamique. Pour l'accès au frein, les deux éléments sont démontables en un seul ensemble, le moteur hydraulique comprenant une étanchéité dynamique agencée pour fermer l'interface du côté avant du moteur hydraulique et ne pas être altérée par un démontage dudit seul ensemble.

De préférence, notamment dans les septième et huitième aspects, l'étanchéité dynamique comprend une bague ayant une face polie qui est en contact étanche et glissant avec une face polie de l'un des éléments sous une pression d'appui générée par un moyen élastique appuyé sur un support monté de manière amovible sur l'autre élément.

Suivant un neuvième aspect de l'invention, dans un moteur hydraulique du type spécifié, pouvant être conforme à un ou plusieurs des aspects précédents ou à tout ou partie de leurs perfectionnements, l'élément hydrodynamique comporte sur sa face radialement extérieure une entretoise qui d'un côté peut s'appuyer sur le palier arrière et de l'autre comporte une face de réaction pour le frein.

De préférence, l'entretoise est maintenue axialement entre le palier arrière et une bague rapportée dans une rainure périphérique de l'élément hydrodynamique.

Suivant un dixième aspect de l'invention, dans un moteur hydraulique du type spécifié, pouvant être conforme à un ou plusieurs des aspects précédents ou à tout ou partie de leurs perfectionnements, l'élément de réaction peut être fixé dans au moins deux positions angulaires différentes par rapport au distributeur d'huile, correspondant chacune à un sens de rotation respectif du moteur hydraulique.

Cet aspect de l'invention permet de réaliser des moteurs identiques pour les roues gauche et droite d'un véhicule et on donne à ces moteurs intrinsèquement identiques des sens de rotation différents en choisissant judicieusement, pour chacun, la position angulaire de l'élément de réaction par rapport au distributeur.

De préférence, l'élément de réaction est fixé au support par des vis réparties angulairement autour d'un axe du moteur avec un pas régulier choisi par rapport à un pas de succession de lobes de la came annulaire pour permettre les deux positions angulaires différentes précitées.

Suivant un onzième aspect de l'invention, dans un moteur hydraulique du type spécifié, pouvant être conforme à l'un au moins des aspects précédents ou à tout ou partie de leurs perfectionnements, le distributeur d'huile est adjacent à une interface définissant au moins un collecteur annulaire, l'interface ayant des diamètres différents de part et d'autre du collecteur pour que l'huile sous pression génère une poussée axiale différentielle sur le distributeur d'huile.

### Description des figures

D'autres particularités et avantages de l'invention apparaîtront à la lecture de la description détaillée de mises en œuvre et de modes de réalisation nullement limitatifs, au regard de figures annexées sur lesquelles :
- la FIGURE 1 est une vue en coupe axiale d'un moteur hydraulique selon l'invention ;
- la FIGURE 2 est une vue schématique selon la flèche II de la figure 1 ;
- la FIGURE 3 est une vue schématique partielle du moteur hydraulique selon l'invention en coupe dans un plan radial ;
- la FIGURE 4 est une vue schématique d'une étanchéité dynamique dans une variante du moteur hydraulique selon l'invention ;
- la FIGURE 5 montre une variante de réalisation dans une vue en coupe axiale partielle ;
- la FIGURE 6 est une vue en coupe axiale d'une variante d'un moteur hydraulique selon l'invention ;
- le est FIGURE 7 une vue en coupe axiale dans la région de la partie arrière de la variante du moteur.

### Description de l'invention

Ces modes de réalisation n'étant nullement limitatifs, on pourra notamment réaliser des variantes de l'invention ne comprenant qu'une sélection de caractéristiques décrites par la suite, telles que décrites ou généralisées, isolées des autres caractéristiques décrites, si cette sélection de caractéristiques est suffisante pour conférer un avantage technique ou pour différencier l'invention par rapport à l'état de la technique.

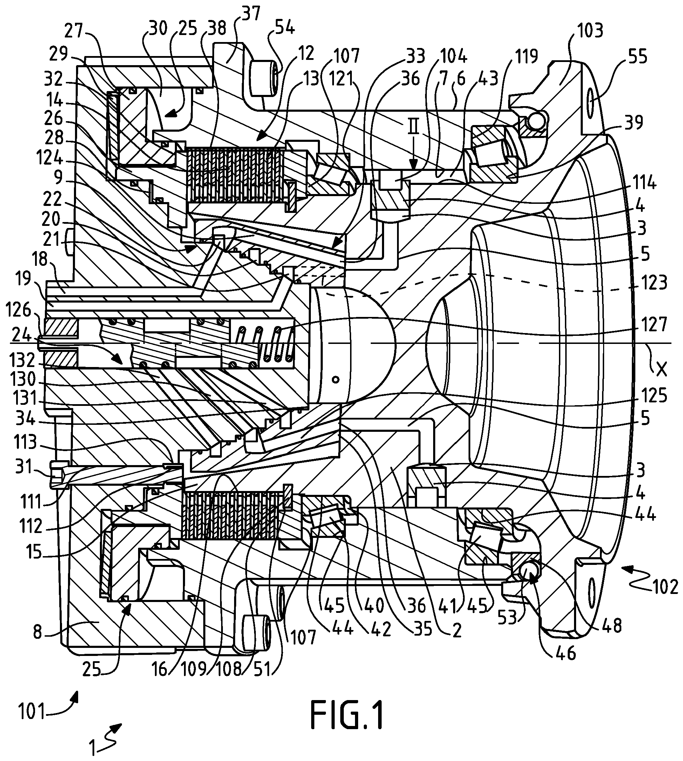

Il est illustré sur la FIGURE 1 un moteur hydraulique 1 pour roue de véhicule tournant autour d'une direction axiale X qui constitue en même temps l'axe du moteur hydraulique 1.

Le moteur comporte un stator 101 et un rotor 102 qui sont rotatifs l'un par rapport à l'autre autour de l'axe X. Le rotor 102 comporte à l'avant du moteur un flasque 103 prévu pour la fixation de la roue, grâce à des trous filetés 55. Le stator 101 comprend un support 8 qui est un couvercle arrière du moteur hydraulique 1 et qui est fixé au châssis du véhicule, éventuellement par l'intermédiaire d'une suspension et/ou d'un pivot de direction.

Dans le mode de réalisation décrit, le moteur hydraulique 1 est conçu pour être le seul lien mécanique entre la roue et le châssis ou la suspension du véhicule, en ce sens qu'il transmet tous les efforts et moments entre le châssis et la roue.

Le moteur hydraulique 1 a pour fonction de convertir de l'énergie hydraulique en énergie mécanique de rotation du rotor 102 par rapport au stator 101. A cet effet, il comprend deux éléments interactifs rotatifs l'un par rapport à l'autre autour de l'axe X, à savoir un élément hydrodynamique 2 sur lequel agit l'huile sous pression, et un élément de réaction 6, qui sont solidaires en rotation l'un du stator 101 et l'autre du rotor 102 et sont disposés l'un autour de l'autre.

Dans le mode de réalisation représenté, l'élément hydrodynamique 2 est solidaire du rotor 102 et l'élément de réaction 6 est solidaire du stator 101. Dans un mode de réalisation typique, comme représenté, l'élément de réaction 6 entoure l'élément hydrodynamique 2.

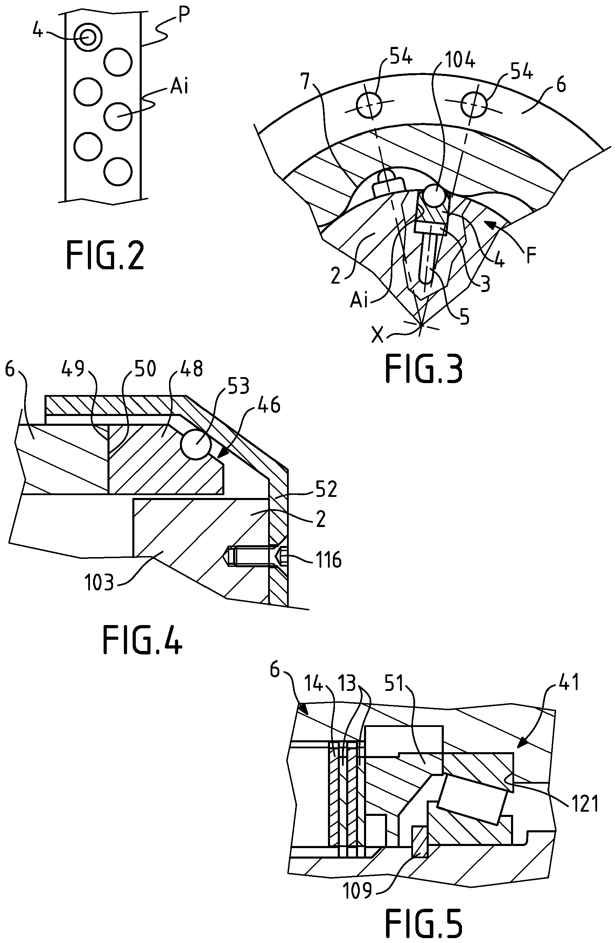

L'élément hydrodynamique 2 comprend une paroi cylindrique externe 114 dans laquelle sont alésées des alvéoles Ai, suivant un axe radial par rapport à l'axe X, comme illustré sur la FIGURE 2. Des pistons 4 sont montés radialement coulissants chacun dans l'une respective des alvéoles Ai et y définissent du côté radialement intérieur une chambre à volume variable 3.

Comme le montre aussi la FIGURE 3, chaque piston 4 comporte sur une face active opposée à la chambre 3, donc tournée radialement vers l'élément de réaction 6, un galet 104 qui roule sur une came annulaire 7 à lobes multiples régulièrement répartis angulairement autour de l'axe X. La came 7 est formée sur la face radialement intérieure de l'élément de réaction 6.

De manière non davantage représentée, le galet 104 est supporté en rotation sur le pison 4 par l'intermédiaire d'un coussinet de façon qu'en service le galet 104 tourne quasiment sans frottement par rapport au piston 4 et roule sans glisser sur la came annulaire 7.

Chaque chambre 3 est raccordée à un distributeur d'huile 9 par un conduit respectif 5 formé dans l'élément hydrodynamique 2. Le distributeur d'huile 9 est solidaire en rotation de l'élément de réaction 6.

À une interface 34, 35 entre l'élément hydrodynamique 2 et le distributeur 9, chaque conduit 5 communique sélectivement avec un collecteur d'arrivée d'huile haute pression 22, un collecteur de retour d'huile 21, un collecteur intermédiaire 20, ou aucun des trois collecteurs 20, 21, 22, en fonction de la position angulaire relative des deux éléments 2 et 6. L'interface 34, 35 est constituée par un épaulement 34 du rotor 102 et par une face adjacente 35 du distributeur.

L'épaulement 34 et la face adjacente 35 du distributeur sont des faces planes, perpendiculaires à l'axe X, pourvues d'un poli miroir, qui sont en contact étanche l'une contre l'autre à l'égard de l'huile de travail même à haute pression, et qui glissent l'une contre l'autre lorsque l'élément hydrodynamique 2 est en rotation par rapport au distributeur 9 solidaire du stator 102. Les conduits 5 reliés aux chambres 3 débouchent à travers l'épaulement 34 et, en fonction de la position angulaire relative du stator 101 et du rotor 102, communiquent sélectivement avec des orifices 36 de conduits 123, 124, 125 formés dans le distributeur d'huile 9. Certains 123 des conduits sont raccordés au collecteur basse pression 21, d'autres 124 au collecteur haute pression 22, et d'autres encore 125 au collecteur intermédiaire 20, en fonction de la position angulaire respective des orifices 36 par rapport aux lobes de la came 7.

En fonctionnement, le moteur a pour fonction de générer un couple dans le sens du mouvement relatif des deux éléments 2, 6. À cette fin, le conduit 5 associé à chaque piston 4 communique avec le collecteur haute pression 22 lorsque, comme représenté FIGURE 3, en fonction du sens de rotation de l'élément hydrodynamique 2 indiqué par la flèche F, le galet 104 se déplace du sommet d'un lobe vers un creux entre deux lobes. Dans ce cas, le piston soumis à la force radiale, par rapport à l'axe X, générée par l'huile haute pression, exerce sur la face oblique de la came une force ayant une composante circonférentielle contribuant au couple moteur. Lorsque le galet 104 est au contraire en train de monter vers le sommet d'un lobe, le conduit 5 communique avec le collecteur de retour d'huile 21. La face oblique du lobe repousse le piston vers le fond de la chambre 3 et, de ce fait, renvoie de l'huile dépressurisée vers l'aspiration de la pompe située sur le véhicule. Lorsque le galet 104 est au sommet d'un lobe ou au creux entre deux lobes, le conduit 5 ne communique ni avec l'huile haute pression, ni avec le retour d'huile.

Ce qui précède concerne le fonctionnement d'un moteur à une seule vitesse, ou le fonctionnement à basse vitesse et fort couple dans un moteur à deux vitesses, tels que celui représenté FIGURE 1. Ces moteurs à au moins deux vitesses sont capables d'au moins un régime de fonctionnement dans lequel les pistons 4 sont désactivés et à cette fin communiquent avec le retour d'huile pendant que leur galet se déplace du sommet vers le creux de certains lobes de la came. Ceci a pour but de diminuer le couple et augmenter la vitesse de rotation du rotor 101, en répartissant le débit d'huile haute pression sur un plus petit nombre de pistons 4. Pour que les pistons 4 soient sélectivement actifs ou inactifs sur un lobe, l'orifice 36 qui communique avec la chambre 3 lorsque le piston 4 descend du sommet vers le creux de ce lobe, est relié au collecteur intermédiaire 20 par un conduit 125. Le collecteur intermédiaire 20 est sélectivement relié au collecteur haute pression 22 ou au collecteur de retour d'huile 21 grâce à un tiroir 24.

À la FIGURE 1, le tiroir 24 est représenté dans ses deux positions possibles, à savoir lobes actifs au-dessus de l'axe X et lobes inactifs en dessous de l'axe X. Le tiroir 24 est commandé par le conducteur du véhicule, par une commande hydraulique à simple effet arrivant par un raccord 126, avec rappel par un ressort 127.

Dans un moteur qui n'aurait qu'un seul régime de fonctionnement, il n'y aurait ni collecteur intermédiaire 20 ni tiroir 24 et tous les orifices 36 seraient raccordés les uns au collecteur haute pression tel que 22, les autres au collecteur de retour d'huile tel que 21.

Pour augmenter le nombre de pistons et donc le couple et la puissance du moteur dans un diamètre raisonnable, il y a deux rangées de pistons dans des plans radiaux voisins (FIGURES 1 et 2). Pour lisser le couple produit par le moteur, les pistons de chaque rangée sont dans des positions angulaires intermédiaires entre celles des pistons de l'autre rangée. Les pistons d'une rangée sont partiellement imbriqués entre les pistons de l'autre rangée, dans un but d'optimisation spatiale. Dans une variante de l'invention, il pourrait n'y avoir qu'une rangée de pistons, ou plus de deux rangées.

Le moteur hydraulique 1 comprend en outre un frein 12 monté fonctionnellement entre l'élément de réaction 6 et l'élément hydrodynamique 2.

Le frein 12 s'oppose sélectivement au mouvement de rotation du moteur hydraulique 1 et présente au moins une deuxième surface de freinage couplée en rotation avec l'élément de réaction 6 et au moins une première surface de freinage couplée en rotation avec l'élément hydrodynamique 2.

Dans le mode de réalisation représenté, le frein 12 est du type multi-disques à bain d'huile comprenant un empilement alterné de disques minces en acier 13 couplés en rotation avec l'un des éléments, ici l'élément hydrodynamique 2, et de disques plus épais 14 couplés en rotation avec l'autre élément, ici l'élément de réaction 6. Les disques 14 sont formés d'une âme métallique dont les deux faces opposées sont garnies d'un matériau de friction conjugué à l'acier des disques 13. Les surfaces de freinage sont les faces de ces disques 13, 14. Les moyens d'activation et de désactivation du frein 12 sont décrits plus loin.

Suivant un aspect de l'invention, l'élément hydrodynamique 2 est solidaire et réalisé d'une seule pièce avec un collet 15 de forme générale cylindrique autour de l'axe X, dirigé axialement vers l'arrière, en particulier vers le support 8. Le collet 15 entoure le distributeur d'huile 9.

À son extrémité avant, la face radialement intérieure du collet 15 est raccordée à l'épaulement 34 déjà décrit, qui est donc une face de l'élément hydrodynamique 2, et qui définit avec ladite face radialement intérieure du collet un chambrage 33 logeant le distributeur 9.

Le collet 15 est entouré par le frein 12. En particulier, le collet 15 porte sur sa face radialement extérieure des moyens de couplage en rotation 16 avec l'une des séries de disques 13, 14, ici les disques en acier 13. Les moyens de couplage 16 sont des cannelures axiales formées sur le collet 15, qui coopèrent avec des dents formées le long du bord radialement intérieur des disques 13, de sorte que les disques 13 sont liés en rotation à l'élément hydrodynamique 2 tout en étant axialement coulissants par rapport à celui-ci.

L'élément de réaction 6 présente une rallonge tubulaire 37 solidaire et réalisée d'une seule pièce avec la came 7. La rallonge 37 solidarise l'élément de réaction 6 au support 8 au moyen de vis 54 réparties angulairement autour de l'axe de rotation X du moteur hydraulique 1. L'élément de réaction 6 peut être fixé dans au moins deux positions angulaires différentes par rapport au distributeur d'huile 9, correspondant chacune à un sens de rotation respectif du moteur hydraulique 1. Pour cela, comme illustré FIGURE 3, le pas de répartition des vis est égal (n-0,5) fois le pas de succession des lobes de la came 7, n étant un entier qui dans l'exemple représenté est égal à 1. Ainsi, avec une adaptation mineure à la construction, consistant à choisir la position angulaire de l'élément de réaction 6 par rapport au support 8 dont est solidaire le distributeur 9, on peut réaliser des moteurs tournant dans un sens ou dans l'autre, pour les roues motrices droite et gauche d'un véhicule.

La rallonge tubulaire 37 entoure le collet 15, avec interposition du frein 12. La rallonge tubulaire 37 est équipée de moyens de couplage 38 pour son couplage avec l'autre série de disques, ici les disques plus épais 14. Les moyens de couplage 38 sont des cannelures axiales formées sur la face radialement intérieure de la rallonge 37, qui coopèrent avec des dents formées le long du bord radialement extérieur des disques 14, de sorte que les disques 14 sont liés en rotation à l'élément de réaction 6, mais axialement coulissants par rapport à celui-ci.

La longueur axiale du frein 12 est voisine de la longueur axiale du distributeur d'huile 9.

Le support 8 comporte une colonne centrale 17 s'étendant selon l'axe X, autour de laquelle est agencé le distributeur 9, qui est de forme annulaire. Le tiroir de distribution 24 est monté mobile dans la colonne centrale 17 pour commander le régime de marche du moteur hydraulique 1.

Dans la colonne centrale 17 sont percés un conduit d'alimentation 18 en huile haute pression et un conduit 19 de retour d'huile qui débouchent à travers une surface latérale de la colonne centrale 17 pour communiquer avec les collecteurs 22 et 21, respectivement, qui sont formés à l'interface entre une surface radialement intérieure du distributeur d'huile 9 et la surface radialement extérieure de la colonne centrale 17.

Les conduits 18 et 19 sont destinés à être raccordés de façon permanente à l'orifice de refoulement et respectivement à l'orifice d'aspiration d'une pompe à huile montée sur le châssis du véhicule.

Pour le raccordement sélectif du collecteur intermédiaire 20 avec l'un ou l'autre des collecteurs 21, 22, les collecteurs 20, 21 et 22 sont raccordés au logement du tiroir 24 par des conduits 18 et 19, respectifs 130, 131, 132 formés à l'intérieur de la colonne.

Selon une particularité, les collecteurs 20, 21, 22 sont formés par des rainures périphériques à l'interface avec la colonne 17. La colonne 17 a un diamètre croissant vers l'arrière, de sorte que le diamètre d'interface est plus grand à l'arrière de chaque collecteur 20, 21 ou 22 qu'à l'avant de ce collecteur. Il en résulte une poussée axiale différentielle sur le distributeur d'huile 9, dirigée vers l'avant, qui plaque l'une contre l'autre les faces 34 et 35 avec une force proportionnelle à la pression d'huile. En particulier, la force axiale ainsi produite équilibre la poussée en sens contraire exercée par l'huile sous pression dans les orifices 36.

Le moteur hydraulique comprend en outre un palier avant 41 et un palier arrière 42 par lesquels le stator 102 et le rotor 101 sont mobiles en rotation l'un par rapport à l'autre.

Les paliers 41, 42 transmettent les efforts entre la roue et le châssis. La came 7 et l'élément hydrodynamique 2 proprement dit, c'est-à-dire la région où se trouvent les pistons 3 et les chambres 5, sont situés axialement entre le palier avant 41 et le palier arrière 42.

Suivant un aspect de l'invention, les paliers 41, 42 sont montés directement entre l'élément hydrodynamique 2 et l'élément de réaction 6. Plus particulièrement, le corps de l'élément hydrodynamique 2 comporte deux portées extérieures 44 sur lesquelles sont directement ajustées des bagues intérieures des deux paliers 41, 42, et l'élément de réaction 6 comporte deux portées intérieures 45 dans lesquelles sont directement ajustées des bagues extérieures des deux paliers 41, 42.

Dans un mode de réalisation, les deux paliers 41, 42 sont du type à roulement conique montés tête bêche pour que chaque palier résiste aux efforts axiaux dans un sens respectif.

Le palier arrière 42 est monté axialement entre la came 7 et le frein 12.

L'élément hydrodynamique 2 présente deux épaulements successifs 39, 40 tournés vers l'arrière, qui réduisent progressivement le diamètre extérieur de l'élément hydrodynamique de l'avant vers l'arrière.

Le palier avant 41 est monté de façon à transmettre de l'élément hydrodynamique 2 à l'élément de réaction 6 les efforts axiaux dirigés vers l'arrière. À cette fin, la bague intérieure du palier avant 41 est adossée contre l'épaulement 39.

Le palier arrière 42 est monté de façon à transmettre de l'élément hydrodynamique 2 à l'élément de réaction 6 les efforts axiaux dirigés vers l'avant. La bague intérieure du palier arrière 42 est voisine de l'épaulement 40 sans y être adossée.

Comme l'épaulement 40 entraîne un moindre diamètre de la portée 44 arrière par rapport à la portée 44 avant, les deux paliers ont des diamètres intérieurs différents.

Ces deux diamètres sont tous deux plus grands que le diamètre extérieur des cannelures 16 formées sur le collet 15 afin de permettre le montage des paliers 41, 42 par l'arrière sur l'élément hydrodynamique 2. L'élément hydrodynamique 2 comporte sur sa face extérieure une entretoise annulaire 51 dont une face avant 107 positionne axialement le palier arrière 42 et dont la face arrière 108 constitue une face de réaction pour le frein 12. L'entretoise annulaire 51 est maintenue axialement en position entre la bague intérieure du palier arrière et une bague démontable 109 insérée dans une rainure périphérique de l'élément hydrodynamique 2. La bague démontable 109 peut être une bague ouverte dont le diamètre peut s'agrandir par déformation élastique, pour permettre à la bague 109 de s'insérer dans la rainure. La bague 109 peut aussi être constituée de deux demi-bagues réunies l'une à l'autre le long d'un plan de joint axial par des moyens de liaison amovibles.

Du côté radialement intérieur de l'élément de réaction 6, la came 7 est radialement saillante entre deux épaulements 119, 121 contre chacun desquels est adossée la bague extérieure de l'un des paliers 41, 42, respectivement.

Le diamètre intérieur des cannelures 38 de l'élément de réaction 6 est supérieur au diamètre extérieur du palier arrière 42, de façon à permettre le montage du palier 42 par l'arrière de l'élément de réaction 6.

Pour la réfection du frein, le démontage des vis 54 permet de séparer le support arrière 8 des deux éléments 2, 6 qui restent assemblés l'un à l'autre grâce à l'entretoise 51 et à la bague 109 qui la verrouille. Les disques de frein peuvent alors être remplacés.

Si le moteur proprement dit doit être démonté, cela est possible, après ablation des vis 54, en enlevant les disques de frein par l'arrière et en ôtant la bague 109, ce qui permet d'extraire l'élément hydrodynamique par un mouvement axial vers l'avant (la droite de la FIGURE 1) relativement à l'élément de réaction 6.

Des moyens d'actionnement 25 du frein 12 sont montés dans le support 8 formant couvercle. Les moyens d'actionnement 25 comprennent deux pistons annulaires 26, 27 situés l'un autour de l'autre et un moyen de désactivation mécanique 31 en prise de filetage avec le support 8.

Le piston annulaire 26 est adjacent à une chambre hydraulique de freinage de service 28 pour activer le frein 12 par application d'une pression hydraulique. Ainsi, la mise sous pression de la chambre hydraulique 28 entraîne un freinage de service, que le conducteur du véhicule actionne pour ralentir ou immobiliser le véhicule lorsque celui-ci est en mouvement ou arrêté pour une courte durée.

Lorsque la chambre annulaire 28 est soumise à une pression d'huile, le piston 26 pousse la pile de disques 13, 14 contre l'entretoise 51, qui s'appuie axialement sur l'élément de réaction 6 par l'intermédiaire du palier arrière 41, lequel transmet les efforts axiaux vers l'avant compte tenu du sens de sa conicité.

Le piston annulaire 27 est un piston de frein de stationnement et est soumis à l'action d'un ressort 29, dans l'exemple une rondelle Belleville, dans le sens de l'activation du frein 12. Le piston 27 est adjacent à une chambre hydraulique 30 de désactivation du frein 12 à l'encontre du ressort 29.

Lorsque le véhicule est immobilisé pour une certaine durée, par exemple lorsque son moteur est à l'arrêt, la chambre de désactivation 30 se dépressurise et le ressort 29 pousse le piston 27 dans le sens du serrage de la pile de disques contre l'entretoise 51. À la mise en marche du véhicule, la chambre 30 est, automatiquement ou manuellement, de nouveau alimentée et la pression d'huile dans la chambre 30 inhibe le piston 27, laissant le frein 12 être commandé uniquement par le piston de frein de service 26.

Dans le mode de réalisation représenté, pour le freinage de stationnement, le piston de frein de stationnement 27 agit sur la pile de disques non pas directement, mais par l'intermédiaire du piston 26 qui présente à cet effet un épaulement 32 dirigé vers l'arrière.

Suivant un mode de réalisation, le moteur hydraulique comprend des moyens de désactivation mécanique du frein de stationnement, pour permettre de libérer le rotor 102 en l'absence de pression dans la chambre 30, notamment en cas d'avarie sur le véhicule. Les moyens de désactivation mécanique comprennent des vis 31 dont la tête est accessible depuis l'arrière du support 8. Les vis traversent des trous lisses 111 du support et sont en prise de filetage avec des trous taraudés 112 formés dans une bride 113 du piston 26. En faisant tourner les vis 31 dans le sens du vissage, on tire vers l'arrière le piston 26, qui par son épaulement 32 entraîne le piston 27 à l'encontre du ressort 29.

En se déplaçant axialement le long de l'interface annulaire 43 entre l'élément hydrodynamique 2 et l'élément de réaction 6, on trouve, d'avant en arrière, une étanchéité dynamique 46 qui ferme l'interface de façon étanche à son extrémité avant, le palier avant 41, la came 7 en regard de la paroi cylindrique 114 de l'élément hydrodynamique, la palier arrière 42, le frein 12 et une partie des moyens 25 d'actionnement de frein.

L'étanchéité dynamique 46 comprend une bague 48 solidaire en rotation de l'élément hydrodynamique 2 et qui comporte une face arrière 49 appuyée contre une face antérieure 50 de l'élément de réaction 6. Les faces 49 et 50 sont planes, perpendiculaires à l'axe X, et usinées avec un poli miroir. La force axiale d'appui mutuel des deux surfaces est générée par la déformation d'un joint torique 53 inséré entre la bague 48 et le flasque 103. En même temps, le joint torique 3 assure l'étanchéité entre la bague 48 et le corps de l'élément hydrodynamique 2 ainsi que, par friction, l'entraînement en rotation de la bague 48 par l'élément hydrodynamique 2.

Dans une variante de réalisation représentée à la FIGURE 4, l'étanchéité dynamique 46 comprend une coupelle 52 fixée de façon amovible à l'élément hydrodynamique 2 par des vis 116. Au lieu de s'appuyer directement sur l'élément 2, le joint torique 53 s'appuie sur la coupelle 52. Pour rénover l'étanchéité dynamique 46, il suffit de déposer la coupelle 52 et de remplacer la bague 48 et/ou le joint torique 53 qui sont d'un diamètre intérieur supérieur au diamètre extérieur du flasque 103, sans avoir à davantage démonter le moteur hydraulique 1.

Dans la réalisation de la FIGURE 5, l'entretoise 51 est interposée entre la paquet de disques 13, 14 et la bague radialement extérieure du palier arrière 42, elle-même adossée contre l'épaulement 121 de l'élément de réaction 6. Autrement dit, la force de réaction opposée par l'épaulement 121 à l'effort de freinage en cas d'activation du frein n'est plus transmise à travers les corps roulants (galets) du palier. La bague démontable 109 ne sert plus qu'à arrêter axialement vers l'arrière la bague intérieure du palier arrière 42. Elle se trouve désormais devant l'entretoise 51 et non plus derrière celle-ci. Après démontage des disques, l'entretoise 51 est extractible vers l'arrière, et on a alors accès à la bague 109 pour son démontage permettant d'extraire l'élément 2 par un mouvement axial vers l'avant par rapport à l'élément de réaction 6. Pour le reste, ce mode de réalisation est identique à celui des FIGURES 1 à 3 ou à celui de la FIGURE 4.

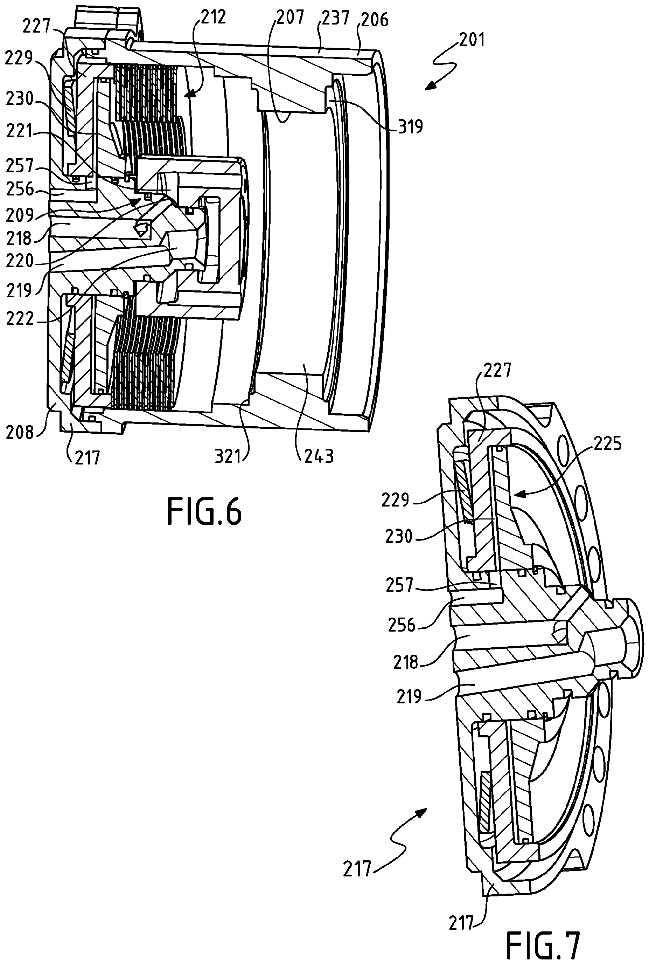

Il est représenté à la FIGURE 6 une vue en coupe axiale d'une variante d'un moteur hydraulique selon l'invention. Il n'est ici décrit que des différences entre le moteur précédemment décrit et cette variante. Des éléments précédemment décrits ont des références augmentées de 200 sur les figures 6 et 7. La FIGURE 7 une vue en coupe axiale dans de la colonne 217.

Dans la colonne centrale 217 est en outre percé un conduit d'alimentation en huile sous pression 256 en huile haute pression qui débouche à travers une surface latérale de la colonne centrale 217 pour communiquer avec un collecteur 257. Le collecteur 257 est formé à l'interface entre une surface radialement intérieure du distributeur d'huile 209 et la surface radialement extérieure de la colonne centrale 217.

Le conduit 256 est destiné à être raccordés de façon permanente un orifice d'amené d'huile sous pression provenant du véhicule destiné à désactiver le frein 212.

Des moyens d'actionnement 225 du frein 212 sont montés dans le support 208 formant couvercle. Les moyens d'actionnement 225 comprennent un piston annulaire 227.

Le piston annulaire 227 est un piston de frein de stationnement et est soumis à l'action d'un ressort 229, dans l'exemple une rondelle Belleville, dans le sens de l'activation du frein 212. Le piston 227 est adjacent à une chambre hydraulique 230 de désactivation du frein 212 à l'encontre du ressort 229.

Lorsque le véhicule est immobilisé pour une certaine durée, par exemple lorsque son moteur est à l'arrêt, la chambre de désactivation 230 se dépressurise et le ressort 229 pousse le piston 227 dans le sens du serrage de la pile de disques. À la mise en marche du véhicule, la chambre 230 est, automatiquement ou manuellement, de nouveau alimentée et la pression d'huile dans la chambre 230 inhibe le piston 227.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

### Nomenclature

- 1, 201: Moteur hydraulique
- 2: élément hydrodynamique
- 3: chambre
- 4: piston
- 5: conduit
- 6, 206: élément de réaction
- 7, 207: came annulaire
- 8, 208: support
- 9, 209: distributeur d'huile
- 12, 212: frein
- 13, 14: disques
- 15: collet
- 16: moyens de couplage en rotation
- 17, 217: colonne centrale
- 18, 218: conduit d'alimentation en huile haute pression
- 19, 219: conduit de retour d'huile
- 20, 220: collecteur intermédiaire
- 21, 221: collecteur d'arrivée d'huile
- 22, 222: collecteur de retour d'huile
- 24: tiroir de distribution
- 25: moyens d'actionnement du frein
- 26: piston de frein de service
- 27: piston de frein de stationnement
- 28: chambre hydraulique de freinage de service
- 29: ressort
- 30: chambre hydraulique de désactivation du frein
- 31: vis
- 32: épaulement d'appui axial mutuel
- 33: chambrage
- 34: épaulement
- 35: face adjacente à l'épaulement
- 36: orifices
- 37, 237: rallonge tubulaire de l'élément de réaction
- 38: moyens de couplage de la rallonge tubulaire
- 39, 40: épaulements successifs de l'élément hydrodynamique
- 41: palier avant
- 42: palier arrière
- 43, 243: interface annulaire
- 44, 45: portées de paliers à roulement
- 46: étanchéité dynamique
- 48: bague d'étanchéité dynamique
- 49: face polie de la bague
- 50: face polie d'un des éléments
- 51: entretoise
- 52: coupelle
- 53: moyen élastique
- 54: vis de fixation de l'élément de réaction
- 55: trous filetés de l'élément hydrodynamique
- 101: stator de moteur
- 102: rotor de moteur
- 103: flasque
- 104: galet de piston
- 107: face avant d'entretoise
- 108: face arrière d'entretoise
- 109: bague
- 111: trous lisses du support
- 112: trous taraudés
- 113: bride du piston 26
- 114: paroi cylindrique externe
- 116: vis
- 119, 121, 319, 321: épaulements
- 123, 124, 125: conduits du distributeur
- 126: raccords hydrauliques
- 127: ressort
- 130, 131, 132: conduits de la colonne
- Ai: alvéoles
- F: sens de rotation de l'élément 2
- X: axe de rotation du moteur hydraulique

## Revendications

1. Moteur hydraulique (1 ; 201) pour roue de véhicule, comprenant:
- un élément hydrodynamique (2) comportant:
i) des alvéoles (Ai),
ii) des pistons (4) montés coulissants chacun dans une alvéole (Ai) respective en y définissant une chambre à volume variable (3), et
iii) des conduits (5) débouchant dans les alvéoles pour communiquer avec les chambres (3),
- un élément de réaction (6 ; 206) comportant une came annulaire (7 ; 207) sur laquelle agit une face active de chaque piston,
- un palier avant (41) et un palier arrière (42) par lesquels, au moins indirectement, l'élément de réaction (6) et l'élément hydrodynamique (2) sont mobiles en rotation l'un par rapport à l'autre autour d'un axe de rotation,
- un support (8 ; 208) lié en rotation à l'un des éléments (6 ; 206), l'autre élément (2) étant adapté à être lié en rotation à une roue de véhicule,
- un distributeur d'huile (9 ; 209) solidaire en rotation de l'élément de réaction (6 ; 206) et faisant sélectivement communiquer les conduits (5) avec une alimentation (18 ; 218) et un retour (19 ; 219) d'huile en fonction de sa position angulaire relativement à l'élément hydrodynamique (2), et
- un frein (12 ; 212) monté fonctionnellement entre les deux éléments (2, 6 ; 206) pour s'opposer sélectivement audit mouvement de rotation, le frein (12 ; 212) ayant au moins une première surface de freinage (13) couplée en rotation avec l'élément hydrodynamique (2) et une deuxième surface de freinage (14) couplée en rotation avec l'élément de réaction (6 ; 206),
**caractérisé en ce que** chaque piston est monté radialement par rapport à l'axe de rotation et **en ce que** l'élément hydrodynamique (2) est solidaire d'un collet (15) qui entoure le distributeur d'huile et porte sur sa face radialement extérieure des moyens de couplage en rotation (16) avec l'au moins une première surface de freinage (13), le frein (12 ; 212) étant ainsi disposé autour du distributeur (9 ; 209).

2. Moteur hydraulique selon la revendication 1, dans lequel l'élément de réaction (6 ; 206) entoure l'élément hydrodynamique et est fixé au moins indirectement au support (8 ; 208) et l'élément hydrodynamique (2) est rotatif par rapport au support (8 ; 208).

3. Moteur hydraulique selon l'une des revendications 1 ou 2, dans lequel le frein (12 ; 212) est du type multidisque, et les moyens de couplage (16) sont des cannelures formées sur le collet (15).

4. Moteur hydraulique selon l'une quelconque des revendications 1 à 3, dans lequel le collet (15) est réalisé d'une seule pièce avec l'élément hydrodynamique (2).

5. Moteur hydraulique selon l'une quelconque des revendications 1 à 4, **caractérisé en ce que** l'élément hydrodynamique (2) comporte radialement à l'intérieur du collet (15) un chambrage (33) délimité par la face intérieure du collet (15) et par un épaulement (34) de l'élément hydrodynamique (2) à travers lequel débouchent les conduits (5), le distributeur d'huile (9) étant essentiellement logé dans le chambrage (33) et comportant une face d'extrémité (35) polie qui est en contact glissant avec l'épaulement (34) et comporte des orifices de distribution (36) qui communiquent sélectivement avec les conduits (5), en fonction de la position angulaire relative de l'élément hydrodynamique (2) et du distributeur d'huile (9).

6. Moteur hydraulique selon l'une quelconque des revendications 1 à 5, dans lequel le support (8 ; 208) est un couvercle arrière du moteur (1 ; 201) et comporte une colonne centrale (17 ; 217) autour de laquelle est monté le distributeur d'huile (9 ; 209), et en ce que des conduits (18, 19 ; 218, 219) de canalisation d'huile formés dans la colonne centrale débouchent à travers une surface latérale (20 ; 220) de la colonne centrale (17 ; 217) pour communiquer avec des collecteurs correspondants (21, 22) adjacents à une surface (23) radialement intérieure du distributeur d'huile (9).

7. Moteur hydraulique selon l'une quelconque des revendications 1 à 6, dans lequel l'élément de réaction (6 ; 206) comporte une rallonge tubulaire (37 ; 237) entourant le frein (12).

8. Moteur hydraulique selon la revendication 7, dans lequel la rallonge tubulaire (37 ; 237) est réalisée d'une seule pièce avec l'élément de réaction (6).

9. Moteur hydraulique selon la revendication 7 ou 8, dans lequel l'élément de réaction (6 ; 206) est solidarisé avec le support par l'intermédiaire de la rallonge tubulaire (37).

10. Moteur hydraulique selon l'une quelconque des revendications 7 à 9, dans lequel la rallonge tubulaire (37 ; 237) est équipée de moyens de couplage (38), en particulier de cannelures, pour son couplage avec l'au moins une deuxième surface de freinage (14).

11. Moteur hydraulique selon l'une quelconque des revendications 7 à 10, dans lequel le palier arrière (42) est directement ajusté sur une portée formée sur l'élément (6 ; 206) solidaire de la rallonge tubulaire (37 ; 237), et en ce que le diamètre extérieur du palier arrière (42) est plus petit qu'un diamètre intérieur des moyens de couplage (38) de la rallonge tubulaire (37 ; 237).

12. Moteur hydraulique selon l'une quelconque des revendications 1 à 11, dans lequel les deux paliers (41, 42) sont directement ajustés sur des portées formées sur l'élément (2) solidaire du collet (15), et en ce que les deux paliers ont chacun un diamètre intérieur plus grand qu'un diamètre extérieur des moyens de couplage (16) du collet (15).

13. Moteur hydraulique selon l'une quelconque des revendications 1 à 12, dans lequel dans le support (8 ; 208) formant couvercle arrière pour le moteur hydraulique (1 ; 201), sont montés des moyens d'actionnement (25 ; 225) du frein (12 ; 212), le frein étant disposé axialement entre le support (8 ; 208) d'une part et la came (7 ; 207) d'autre part, les moyens d'actionnement (25) comprennant deux pistons annulaires (26, 27) situés l'un autour de l'autre, l'un (26) adjacent à une chambre hydraulique de freinage de service (28) pour activer le frein (12) par application d'une pression hydraulique, l'autre (27) soumis à l'action d'un ressort (29) dans le sens de l'activation du frein (12) et adjacent à une chambre hydraulique (30) de désactivation du frein (12) à encontre du ressort (29).

14. Moteur hydraulique selon l'une quelconque des revendications 1 à 13, dans lequel l'élément hydrodynamique (2) monté radialement à l'intérieur de l'élément de réaction (6) présente deux épaulements successifs (39, 40) tournés vers l'arrière, qui réduisent progressivement le diamètre extérieur de l'élément hydrodynamique de l'avant vers l'arrière, et en ce que chaque palier (41, 42) est monté sur l'élément hydrodynamique en étant adossé contre l'un respectif des deux épaulements (39, 40), les deux paliers étant de diamètre intérieur différent.

15. Moteur hydraulique selon l'une quelconque des revendications 1 à 14, dans lequel l'élément hydrodynamique (2) comporte sur sa face radialement extérieure une entretoise (51) qui d'un côté (107) peut s'appuyer sur le palier arrière (42) et de l'autre comporte une face de réaction (108) pour le frein (12).

## Patentansprüche

1. Hydraulischer Antrieb (1; 201) für ein Fahrzeugrad, umfassend:
- ein hydrodynamisches Element (2), das aufweist:
i) Buchsen (Ai),
ii) Kolben (4), die jeweils verschieblich in einer jeweiligen Buchse (Ai) gelagert sind, wobei sie darin eine Kammer mit veränderlichem Volumen (3) definieren, und
iii) Kanäle (5), die in die Buchsen münden, um mit den Kammern (3) in Verbindung zu stehen,
- ein Reaktionselement (6; 206), das einen ringförmigen Nocken (7; 207) aufweist, auf den eine Wirkfläche jedes Kolbens wirkt,
- ein vorderes Lager (41) und ein hinteres Lager (42), über die, zumindest indirekt, das Reaktionselement (6) und das hydrodynamische Element (2) in Bezug aufeinander um eine Drehachse herum drehbeweglich sind,
- einen Träger (8; 208), der mit dem einem der Elemente (6; 206) drehverbunden ist, wobei das andere Element (2) geeignet ist, mit einem Fahrzeugrad drehverbunden zu sein,
- einen Ölverteiler (9; 209), der einstückig mit dem Reaktionselement (6; 206) ist und die Kanäle (5) mit einer Ölzuleitung (18; 218) und einer Ölrückleitung (19; 219) in Abhängigkeit von seiner Winkelposition relativ zum hydrodynamischen Element (2) selektiv in Verbindung bringt, und
- eine Bremse (12; 212), die wirksam zwischen den beiden Elementen (2, 6; 206) gelagert ist, um der Drehbewegung selektiv entgegenzuwirken, wobei die Bremse (12; 212) mindestens eine erste Bremsfläche (13), die mit dem hydrodynamischen Element (2) drehgekuppelt ist, und eine zweite Bremsfläche (14), die mit dem Reaktionselement (6; 206) drehgekuppelt ist, besitzt,
**dadurch gekennzeichnet, dass** jeder Kolben in Bezug auf die Drehachse radial gelagert ist und dass das hydrodynamische Element (2) einstückig mit einem Kragen (15) ist, der den Ölverteiler umgibt und auf seiner radial äußeren Seite Drehkupplungsmittel (16) zur Drehkupplung mit der mindestens einen ersten Bremsfläche (13) trägt, wobei die Bremse (12; 212) somit um den Verteiler (9; 209) herum angeordnet ist.

2. Hydraulischer Antrieb nach Anspruch 1, bei dem das Reaktionselement (6; 206) das hydrodynamische Element umgibt und zumindest indirekt an dem Träger (8; 208) fixiert ist und das hydrodynamische Element (2) in Bezug auf den Träger (8; 208) drehbar ist.

3. Hydraulischer Antrieb nach einem der Ansprüche 1 oder 2, bei dem die Bremse (12; 212) vom Mehrscheibentyp ist und die Kupplungsmittel (16) Passverzahnungen sind, die auf dem Kragen (15) ausgebildet sind.

4. Hydraulischer Antrieb nach einem der Ansprüche 1 bis 3, bei dem der Kragen (15) einteilig mit dem hydrodynamischen Element (2) ausgeführt ist.

5. Hydraulischer Antrieb nach einem der Ansprüche 1 bis 4, **dadurch gekennzeichnet, dass** das hydrodynamische Element (2) radial innerhalb des Kragens (15) eine Senkung (33) aufweist, die durch die Innenseite des Kragens (15) und durch eine Schulter (34) des hydrodynamischen Elements (2) begrenzt wird, durch die hindurch die Kanäle (5) münden, wobei der Ölverteiler (9) im Wesentlichen in der Senkung (33) aufgenommen ist und eine polierte Endseite (35) aufweist, die in Gleitkontakt mit der Schulter (34) ist und Verteilungsbohrungen (36) aufweist, die mit den Kanälen (5) in Abhängigkeit von der relativen Winkelposition des hydrodynamischen Elements (2) und des Ölverteilers (9) selektiv in Verbindung stehen.

6. Hydraulischer Antrieb nach einem der Ansprüche 1 bis 5, bei dem der Träger (8; 208) ein rückwärtiger Deckel des Motors (1; 201) ist und eine zentrale Säule (17; 217) aufweist, um die herum der Ölverteiler (9; 209) gelagert ist, und dadurch, dass Ölleitungskanäle (18, 19; 218, 219), die in der zentralen Säule ausgebildet sind, durch eine Seitenfläche (20; 220) der zentralen Säule (17; 217) hindurch münden, um mit entsprechenden Sammelleitungen (21, 22) in Verbindung zu stehen, die benachbart zu einer radial inneren Fläche (23) des Ölverteilers (9) sind.

7. Hydraulischer Antrieb nach einem der Ansprüche 1 bis 6, bei dem das Reaktionselement (6, 206) eine rohrförmige Verlängerung (37; 237) aufweist, welche die Bremse (12) umgibt.

8. Hydraulischer Antrieb nach Anspruch 7, bei dem die rohrförmige Verlängerung (37; 237) einteilig mit dem Reaktionselement (6) ausgeführt ist.

9. Hydraulischer Antrieb nach Anspruch 7 oder 8, bei dem das Reaktionselement (6; 206) mit dem Träger über die rohrförmige Verlängerung (37) fest verbunden ist.

10. Hydraulischer Antrieb nach einem der Ansprüche 7 bis 9, bei dem die rohrförmige Verlängerung (37; 237) mit Kupplungsmitteln (38), insbesondere Passverzahnungen, zu ihrer Kupplung mit der mindestens einen zweiten Bremsfläche (14) ausgestattet ist.

11. Hydraulischer Antrieb nach einem der Ansprüche 7 bis 10, bei dem das hintere Lager (42) direkt auf eine Auflagefläche gepasst ist, die an dem Element (6; 206) ausgebildet ist, das einstückig mit der rohrförmigen Verlängerung (37; 237) ist, und dadurch, dass der Außendurchmesser des hinteren Lagers (42) kleiner als ein Innendurchmesser der Kupplungsmittel (38) der rohrförmigen Verlängerung (37; 237) ist.

12. Hydraulischer Antrieb nach einem der Ansprüche 1 bis 11, bei dem die beiden Lager (41, 42) direkt auf Auflageflächen gepasst sind, die an dem Element (2) ausgebildet sind, das einstückig mit dem Kragen (15) ist, und dadurch, dass die beiden Lager jeweils einen Innendurchmesser haben, der größer als ein Außendurchmesser der Kupplungsmittel (16) des Kragens (15) ist.

13. Hydraulischer Antrieb nach einem der Ansprüche 1 bis 12, wobei in dem Träger (8; 208), der den rückwärtigen Deckel für den hydraulischen Antrieb (1; 201) bildet, Betätigungsmittel (25; 225) zur Betätigung der Bremse (12; 212) gelagert sind, wobei die Bremse axial zwischen dem Träger (8; 208) einerseits und dem Nocken (7; 207) andererseits angeordnet ist, wobei die Betätigungsmittel (25) zwei ringförmige Kolben (26, 27) umfassen, die umeinander herum gelegen sind, der eine (26) benachbart zu einer hydraulischen Betriebsbremskammer (28) zum Aktivieren der Bremse (12) durch Aufbringen eines hydraulischen Drucks, der andere (27) durch die Wirkung einer Feder (29) in Richtung der Aktivierung der Bremse (12) beaufschlagt und benachbart zu einer hydraulischen Kammer (30) zur Deaktivierung der Bremse (12) gegen die Feder (29).

14. Hydraulischer Antrieb nach einem der Ansprüche 1 bis 13, bei dem das hydrodynamische Element (2), das radial innerhalb des Reaktionselements (6) gelagert ist, zwei aufeinander folgende, nach hinten gewandte Schultern (39; 40) vorweist, die den Außendurchmesser des hydrodynamischen Elements schrittweise von vorn nach hinten verringern, und dadurch, dass jedes Lager (41, 42) auf dem hydrodynamischen Element gelagert ist, wobei es gegen jeweils eine der beiden Schultern (39, 40) gesetzt ist, wobei die beiden Lager unterschiedliche Innendurchmesser haben.

15. Hydraulischer Antrieb nach einem der Ansprüche 1 bis 14, bei dem das hydrodynamische Element (2) auf seiner radial äußeren Seite ein Distanzstück (51) aufweist, das sich auf einer Seite (107) auf dem hinteren Lager (42) abstützen kann und auf der anderen eine Reaktionsfläche (108) für die Bremse (12) aufweist.

## Claims

1. Hydraulic motor (1; 201) for a vehicle wheel, comprising:
- a hydrodynamic element (2) having:
i) cells (Ai),
ii) pistons (4) mounted so as each to slide in a respective cell (Ai), defining a variable-volume chamber (3) therein, and
iii) ducts (5) that lead into the cells in order to communicate with the chambers (3),
- a reaction element (6; 206) comprising an annular cam (7; 207) on which an active face of each piston acts,
- a front bearing (41) and a rear bearing (42), by way of which, at least indirectly, the reaction element (6) and the hydrodynamic element (2) are rotatable with respect to one another about an axis of rotation,
- a support (8; 208) rotationally linked to one of the elements (6; 206), the other element (2) being designed to be rotationally linked to a vehicle wheel,
- an oil distributor (9; 209) that rotates as one with the reaction element (6; 206) and brings the ducts (5) selectively into communication with an oil supply line (18; 218) and oil return line (19; 219) depending on its angular position relative to the hydrodynamic element (2), and
- a brake (12; 212) mounted functionally between the two elements (2, 6; 206) in order to selectively prevent said rotational movement, the brake (12; 212) having at least one first braking surface (13) rotationally coupled to the hydrodynamic element (2), and a second braking surface (14) rotationally coupled to the reaction element (6; 206),
**characterized in that** each piston is mounted radially with respect to the axis of rotation, and **in that** the hydrodynamic element (2) is secured to a collar (15) which surrounds the oil distributor and bears, on its radially outer face, means (16) for rotationally coupling to the at least one first braking surface (13), the brake (12; 212) thus being disposed around the distributor (9; 209).

2. Hydraulic motor according to Claim 1, wherein the reaction element (6; 206) surrounds the hydrodynamic element and is fixed at least indirectly to the support (8; 208), and the hydrodynamic element (2) is able to rotate with respect to the support (8; 208).

3. Hydraulic motor according to either of Claims 1 and 2, wherein the brake (12; 212) is of the multi-disk type, and the coupling means (16) are splines formed on the collar (15).

4. Hydraulic motor according to any one of Claims 1 to 3, wherein the collar (15) is made in one piece with the hydrodynamic element (2).

5. Hydraulic motor according to any one of Claims 1 to 4, **characterized in that** the hydrodynamic element (2) has, radially on the inside of the collar (15), a recess (33) delimited by the inner face of the collar (15) and by a shoulder (34) of the hydrodynamic element (2) through which the ducts (5) lead, the oil distributor (9) being essentially housed in the recess (33) and having a polished end face (35) which is in sliding contact with the shoulder (34) and has distribution orifices (36) which communicate selectively with the ducts (5), depending on the relative angular position of the hydrodynamic element (2) and of the oil distributor (9).

6. Hydraulic motor according to any one of Claims 1 to 5, wherein the support (8; 208) is a rear cover of the motor (1; 201) and has a central column (17; 217) about which the oil distributor (9; 209) is mounted, and in that oil channeling ducts (18. 19; 218, 219) formed in the central column lead through a lateral surface (20; 220) of the central column (17; 217) in order to communicate with corresponding manifolds (21, 22) adjacent to a radially inner surface (23) of the oil distributor (9).

7. Hydraulic motor according to any one of Claims 1 to 6, wherein the reaction element (6; 206) has a tubular extension (37; 237) surrounding the brake (12).

8. Hydraulic motor according to Claim 7, wherein the tubular extension (37; 237) is made in one piece with the reaction element (6).

9. Hydraulic motor according to Claim 7 or 8, wherein the reaction element (6; 206) is secured to the support by way of the tubular extension (37).

10. Hydraulic motor according to any one of Claims 7 to 9, wherein the tubular extension (37; 237) is equipped with coupling means (38), in particular splines, in order to be coupled to the at least one second braking surface (14).

11. Hydraulic motor according to any one of Claims 7 to 10, wherein the rear bearing (42) is fitted directly on a bearing surface formed on the element (6; 206) secured to the tubular extension (37; 237), and in that the outside diameter of the rear bearing (42) is smaller than an inside diameter of the coupling means (38) of the tubular extension (37; 237).

12. Hydraulic motor according to any one of Claims 1 to 11, wherein the two bearings (41, 42) are fitted directly on bearing surfaces formed on the element (2) secured to the collar (15), and in that the two bearings each have an inside diameter larger than an outside diameter of the coupling means (16) of the collar (15).

13. Hydraulic motor according to any one of Claims 1 to 12, wherein, in the support (8; 208) forming a rear cover for the hydraulic motor (1; 201), actuating means (25; 225) for the brake (12; 212) are mounted, the brake being disposed axially between the support (8; 208) for the one part and the cam (7; 207) for the other, the actuating means (25) comprising two annular pistons (26, 27) situated one around the other, one (26) adjacent to a service braking hydraulic chamber (28) in order to activate the brake (12) by application of a hydraulic pressure, the other (27) being subjected to the action of a spring (29) in the direction of activation of the brake (12) and adjacent to a hydraulic chamber (30) for deactivation of the brake (12) against the action of the spring (29).

14. Hydraulic motor according to any one of Claims 1 to 13, wherein the hydrodynamic element (2) mounted radially inside the reaction element (6) has two successive, rearwardly facing shoulders (39, 40) which progressively reduce the outside diameter of the hydrodynamic element from front to rear, and in that each bearing (41, 42) is mounted on the hydrodynamic element, butting against a respective one of the two shoulders (39, 40), the two bearings having different inside diameters.

15. Hydraulic motor according to any one of Claims 1 to 14, wherein the hydrodynamic element (2) has, on its radially outer face, a spacer (51), one side (107) of which can press against the rear bearing (42) and the other side of which has a reaction face (108) for the brake (12).
